# EUROPEAN PATENT APPLICATION

(11) **EP 2 835 849 A1**
(43) Date of publication of application: **11.02.2015**
(21) Application number: 13772289.8
(22) Date of filing: 15.03.2013
(51) Int. Cl.: H01M 4/58, H01M 4/36

(54) **METHOD FOR PRODUCING POSITIVE ELECTRODE ACTIVE MATERIAL FOR NONAQUEOUS SECONDARY BATTERIES, POSITIVE ELECTRODE FOR NONAQUEOUS SECONDARY BATTERIES, AND NONAQUEOUS SECONDARY BATTERY**

(30) Priority: 05.04.2012 JP 2012086308
(71) Applicant: Hitachi Metals, Ltd., Tokyo 105-8614 (JP)
(72) Inventor: KITAGAWA Kan, Tokyo 100-8280 (JP); YUASA Toyotaka, Tokyo 100-8280 (JP)
(74) Representative: Beetz & Partner mbB
(86) International application number: PCT/JP2013/057416
(87) International publication number: WO 2013/150877

(57) **Abstract**

Provided are a positive electrode active material for nonaqueous secondary batteries that is capable of supplying a nonaqueous secondary battery high in capacity, energy density and rate characteristic; and a method for producing the active material, using a polyanionic active material. The method is a method for producing a positive electrode active material for nonaqueous secondary batteries, the positive electrode active material being represented by a chemical formula of AₓMD_{y}O_{z} wherein A is an alkali metal or an alkaline earth metal, M is one or more metal elementscomprising at least one transition metal element, D is a typical element being covalently bondable to oxygen O to form an anion, and x, y and z, respectively, satisfy the relationships 0 ≤ x ≤ 2, 1 ≤ y ≤ 2 and 3 ≤ z ≤ 7. The method includes the steps of mixing raw materials of the positive electrode active material with each other, pre-calcining the mixed raw materials in an oxidizing atmosphere at a temperature of 400°C or higher, mixing carbon or an organic substance with a pre-calcinated material yielded through the pre-calcining step, and the step of calcining the pre-calcinated material, with which the carbon or the organic substance is mixed in a reducing atmosphere or an inert atmosphere.

## Description

### Technical Field

The present invention relates to a method for producing a positive electrode active material for nonaqueous secondary batteries, the positive electrode active material being represented by a chemical formula of AₓMD_{y}O_{z} wherein A is an alkali metal or an alkaline earth metal, M is one or more metal elements comprising at least one transition metal element, D is a typical element being covalently bondable to oxygen O to form an anion, and x, y and z, respectively, satisfy the relationships 0 ≤ x ≤ 2, 1 ≤ y ≤ 2 and 3 ≤ z ≤ 7, or a chemical formula of LiMPO₄ wherein M is one or more metal elements comprising at least one selected from Fe, Mn, Co and Ni; a positive electrode active material (usable) for nonaqueous secondary batteries; and a nonaqueous secondary battery.

### Background Art

In recent years, developments have been advanced about high-performance nonaqueous secondary batteries, in particular, lithium secondary batteries. Hitherto, the main current of positive electrode active materials for lithium secondary batteries has been lithium cobaltate. Lithium secondary batteries using this compound have been widely used. However, cobalt, which is a raw material of lithium cobaltate, is small in production quantity to be expensive. Thus, alternative materials for the compound have been investigated. Lithium manganate, which is one of the alternative materials and has a spinel structure, has problems that this compound is insufficient in discharge capacity and manganese is melted out at high temperature. Lithium nickelate, which can be expected to have a high capacity, has a problem about thermal stability at high temperature.

For such reasons, olivine type positive electrode active material (called "olivine" hereinafter) has been expected as a positive electrode active material. Olivine is represented by a chemical formula of LiMPO₄ wherein M is a transition metal. Olivine has, in the structure thereof, strong P-O bonds, so that even at high temperature, oxygen does not leave from this material. Thus, olivine is high in thermal stability and excellent in safety.

However, olivine has a drawback of being poor in electron conductivity and ion conductivity. Thus, olivine has a problem that a discharge capacity cannot be sufficiently taken out therefrom. This is because strong p-O bonds are present in olivine so that electrons are unfavorably localized therein.

In order to improve nonaqueous secondary batteries in safety, suggested are not only olivine but also an active material having a polyanion (anion in which a single typical element is bonded to plural oxygen atoms, such as PO₄³⁻, BO₃³⁻ or SiO₄⁴⁻), an example of the active material being typically olivine (and other examples thereof being LiMPO₄, Li₂MSiO₄ and LiMBO₃ wherein M is a transition metal, and the active material being to be referred to as the "polyanionic active material" hereinafter.) The polyanionic active material is poor in electroconductivity because of the localization of electrons therein to have the same problem as the above-mentioned material olivine.

Against such problems, techniques of coating the surface of olivine with carbon are suggested to improve olivine in electron conductivity (for example, Patent Literature 1). In order to improve olivine in electron conductivity and ion conductivity, a technique is suggested in which particles of olivine are decreased in diameter to increase olivine in reaction area to shorten the diffusion distance (for example, Non Patent Literature 1).

Examples of the method for coating olivine with carbon include a method of mixing olivine with acetylene black or graphite, and causing olivine to adhere closely to the C-based material in, for example, a ball mill; and a method of mixing olivine with an organic substance such as a saccharide, an organic acid or pitch, and then firing the mixture. The method for decreasing particles of olivine in diameter may be a method of restraining the growth of olivine by lowering the firing temperature, or by mixing of olivine with a carbon source. However, merely by decreasing the particles of olivine in diameter, or coating olivine with carbon, the resultant battery cannot gain a high capacity. This matter demonstrates that an improvement of olivine in properties is insufficient only by decreasing particles thereof in diameter or coating olivine with carbon.

As a method for producing olivine, known are methods of synthesizing fine particles of LiFePO₄, or techniques of decreasing particles of olivine in diameter, and coating the particles with carbon to yield particles improved in electroconductivity. One of the methods of synthesizing fine particles of LiPO₄ is a synthesizing method using an organic acid complex manner. The organic acid complex manner is a synthesizing manner of using a chelate effect that an organic acid has to dissolve raw materials, drying the resultant solution to yield a raw material powder in which the raw materials are homogeneously mixed with each other, and firing the raw material powder. Making the raw materials homogeneous would be favorable for improving the resultant in crystallinity. However, by firing this raw material powder simply, the fired body comes to have a structure having coarse meshes. The metal element constituting olivine is bivalent, as shown by the chemical formula thereof. However, when the metal element is oxidized in the production process, different phases other than olivine are formed (examples of the phases include Fe₂O₃, LiFeP₂O₇, Li₃Fe₂ (PO₄)₃, Mn₂O₃, MnO₂, and Mn₂P₂O₇). In the case of selecting, in particular, at least Fe as the metal element, Fe easily becomes trivalent. Thus, an inert gas or reducing gas, which constitutes an atmosphere in which Fe is not oxidized in the production process, has been required.

### Citation List

### Patent Literature

PTL 1: Japanese Patent Application Laid-Open No. 2001-15111

### Non Patent Literature

NPTL 1: A. Yamada, S. C. Chung, and K. Hinokuma "Optimized LiFePO4 for Lithium Battery Cathodes", Journal of the Electrochemical Society 148 (2001), pp. A224-A229

### Summary of Invention

### Technical Problem

As described above, it is insufficient for an improvement of olivine type compounds in properties that particles thereof are decreased in diameter or the particles are coated with carbon. As will be detailed later, the compounds can gain high properties if particles thereof can be obtained to have an improved crystallinity while the particles can be decreased in diameter and coated with carbon. However, the above-mentioned precedent technical literatures never disclose any method for improving the compounds sufficiently in crystallinity while particles thereof can be decreased in diameter and coated with carbon.

The present invention has been made in light of the above-mentioned situation. An object thereof is to provide a positive electrode active material for nonaqueous secondary batteries that is capable of supplying a nonaqueous secondary battery high in capacity and rate characteristic, using a polyanionic active material such as olivine; and a method for producing the active material. Another object thereof is to provide a positive electrode for nonaqueous secondary batteries that is capable of supplying a nonaqueous secondary battery high in capacity and rate characteristic; and a nonaqueous secondary battery high in capacity and rate characteristic.

### Solution to Problem

(1) The present invention provides a method for producing a positive electrode active material for nonaqueous secondary batteries, the positive electrode active material being represented by a chemical formula of AₓMD_{y}O_{z} wherein A is an alkali metal or an alkaline earth metal, M is one or more metal elements comprising at least one transition metal element, D is a typical element being covalently bondable to oxygen O to form an anion, and x, y and z, respectively, satisfy the relationships 0 ≤ x ≤ 2, 1 ≤ y ≤ 2 and 3 ≤ z ≤ 7, or a positive electrode active material for nonaqueous secondary batteries, the positive electrode active material being represented by a chemical formula of LiMPO₄ wherein M is one or more metal elements cmprising at least one selected from Fe, Mn, Co and Ni,
   the method comprising:
   the step of mixing raw materials of the positive electrode active material with each other,
   the step of pre-calcining the mixed raw materials in an oxidizing atmosphere at a temperature of 400°C or higher,
   the step of mixing carbon or an organic substance with a pre-calcinated material yielded through the pre-calcining step, and
   the step of calcining the pre-calcinated material, with which carbon or the organic substance is mixed, in a reducing atmosphere or an inert atmosphere.
(II) The invention also provides a positive electrode active material for nonaqueous secondary batteries which is produced by use of the above-mentioned method, which is a method for producing a positive electrode active material for nonaqueous secondary batteries.
(III) The invention also provides a positive electrode for nonaqueous secondary batteries, using the above-mentioned nonaqueous-secondary-battery-usable positive electrode active material.
(IV) The invention also provides a nonaqueous secondary battery, using the above-mentioned nonaqueous-secondary-battery-usable positive electrode. Advantageous Effects of Invention

The present invention makes it possible to use a polyanionic active material to provide a positive electrode active material for nonaqueous secondary batteries that is capable of supplying a nonaqueous secondary battery high in capacity, energy density and rate characteristic; and a method for producing the active material. The invention also makes it possible to provide a positive electrode for nonaqueous secondary batteries that is capable of supplying a nonaqueous secondary battery high in capacity, energy density and rate characteristic; and a nonaqueous secondary battery high in capacity, energy density and rate characteristic.

### Brief Description of Drawings

Figure 1A is a flowchart referred to for describing the method of the present invention.
Figure 1B is a flowchart referred to for describing a conventional method.
Figurer 2A is a schematic view referred to for describing a structure of a positive electrode active material according to the method of the invention.
Figure 2B is a schematic view referred to for describing a structure of a positive electrode active material according to the conventional method.
Figure 3 is a lithium secondary battery, using a positive electrode to which the invention is applied for lithium secondary batteries.
Figure 4A is a scanning electron microscopic photograph of a positive electrode active material powder synthesized in Example 1.
Figure 4B is a scanning electron microscopic photograph of a positive electrode active material powder synthesized by a conventional hydrothermal synthesis.
Figure 5A is a graph showing a voltage-to-capacity relationship between a positive electrode active material according to a method of the present invention and a positive electrode active material according to a conventional method.
Figure 5B is a graph showing a specific-capacity-to-current relationship between the positive electrode active material according to the method of the invention and the positive electrode active material according to the conventional method.
Figure 5C is a graph showing an XRD pattern of each of the positive electrode active material according to the method of the invention and the positive electrode active material according to the conventional method.

### Description of Embodiments

In the present invention, improvements or modifications as described below may be applied to the above-mentioned method for producing a positive electrode active material for nonaqueous secondary batteries.
(i) The formula AₓMD_{y}O_{z} is LiMPO₄ wherein M is one or more metal elements comprising at least one selected from Fe, Mn, Co and Ni.
(ii) The positive electrode active material contains bivalent Fe.
(iii) The temperature of the pre-calcining step is equal to or higher than the crystallization temperature of the target positive electrode active material, and is not higher than the temperature of the crystallization temperature plus 50°C.
(iv) The temperature of the pre-calcining step is from 400 to 600°C both inclusive.
(v) The temperature of the pre-calcining step is from 400 to 550°C both inclusive.
(vi) The positive electrode active material is a material selected from the group consisting of LiMnPO₄, LiFePO₄, LiFe_{0.2}Mn_{0.8}PO₄, and LiFe_{0.2}Mn_{0.77}Mg_{0.03}PO₄.

The target positive electrode active material in the present invention is represented by a chemical formula of AₓMD_{y}O_{z} wherein A is an alkali metal or an alkaline earth metal, M is one or more metal elements comprising at least one transition metal element, D is a typical element being covalently bondable to oxygen O to form an anion, and x, y and z, respectively, satisfy the relationships 0 ≤ x ≤ 2, 1 ≤ y ≤ 2 and 3 ≤ z ≤ 7. The active material is represented by, particularly, a chemical formula of LiMPO₄ wherein M is one or more metal elements comprising at least one selected from Fe, Mn, Co and Ni. LiMPO₄ in the present invention may be a compound having a composition having a ratio deviated from the stoichiometric ratio thereof. Specifically, when this compound is represented by LiₓM(PO₄)_{y}, the compound may be a compound in which the following is satisfied: 1.0 ≤ x ≤ 1.15 and 1.0 ≤ y ≤ 1.15.

As described above, merely by decreasing particles of olivine in diameter and coating the particles with carbon, the resultant battery cannot gain a high capacity. Thus, the inventors have made it evident that there are properties of olivine that are unable to be improved by the decrease in the particle diameter and the carbon coating, and have then investigated a method for improving the properties. As a result, the inventors have found out that it is important for the property-improvement that the crystallinity of the positive electrode active material is improved, that is, found out that when the positive electrode active material is a low-crystallinity positive electrode active material, the resultant battery is lowered in capacity. The reason why the crystallinity affects the capacity is unclear, but would be as follows: Main causes for lowering the crystallinity are impurities. The presence of the impurities may cause ion diffusion paths in the positive electrode active material to be cut, so that the diffusion of ions may be hindered. Alternatively, crystal grain boundaries are generated in the particles so that regions in each of which both ends of any one of the diffusion paths are blocked by some of the grain boundaries may be inactivated. About an active material of a one-dimensional diffusion type, such as olivine, a slight presence of impurities therein results in the inactivation of Li ions. The inactivation would largely affect the capacity.

In the polyanionic positive electrode active material represented by AₓMD_{y}O_{z}, oxygen is present as a polyanion so that electrons are easily localized in the material. Thus, the active material is low in electron conductivity. It is therefore necessary to coat the active material with carbon in order to use the active material as an electrode material. The carbon coating results in the incorporation of the impurity into the active material to cause the active material easily to be lowered in crystallinity. For this reason, required is a technique of heightening the polyanionic positive electrode active material in crystallinity while the material is coated with carbon.

As described above, in order to improve properties of a polyanionic positive electrode active material, a typical example of which is olivine, it is necessary for the active material to be improved in crystallinity, as well as to be improved in electron conductivity by carbon coating, and be increased in surface area and decreased in diffusion distance by decreasing particles of the material in diameter.

As described above, causes for lowering the crystallinity would be the incorporation of impurities into the crystal. Examples of the impurities include an anion in a metal salt used as one out of raw materials (an acetic ion in an acetic acid salt or an oxalic ion in an oxalic acid salt); impurities in the raw materials; and a carbon source, and any other additive to be added in order to control the particle diameter.

Thus, in the present invention, the raw materials are pre-calcinated in an oxidizing atmosphere at a temperature equal to or higher than the crystallization temperature of the above-defined positive electrode active material, and a temperature equal to or higher than the decomposition temperature of carbon. Specifically, the pre-calcining temperature is preferably 400°C, which is the carbon decomposition temperature, or higher. In the present invention, the crystallization temperature is defined as the temperature of the following peak out of exothermic peaks which make their appearance when the material is subjected to thermal analysis by TG-DTA, DSC or some other in the step of firing the material, and which result from the crystallization of the material: a highest-temperature peak.

When atmospheres used when the raw materials are sintered are compared therebetween in connection with the above-mentioned impurities, the impurities can be expected to be further decreased in an oxidizing atmosphere, which is one of the used atmospheres and is excellent in decomposing power, than the other atmospheres. A decrease of, in particular, carbon, and organic substances such as hydrocarbons can be expected. Under such an expectation or aim, the inventors have found out that when the raw materials are pre-calcinated in an oxidizing atmosphere, the resultant positive electrode active material gives an improved capacity and rate characteristic. The reason why the properties are improved by the calcination in the oxidizing atmosphere is not completely clear. However, in light of the above-mentioned consideration, the insertion of the calcination in the oxidizing atmosphere into the middle of the process would decrease the impurities and act effectively to improve the properties.

However, when the raw materials are pre-calcinated in the oxidizing atmosphere, it is feared that a constituent metal element therein is oxidized. Thus, when the valence of the constituent metal element in the target active material is bivalent, it is necessary to reduce the metal element that has been oxidized to turn trivalent or tetravalent. Examples of the method for the reduction include a method of calcining the raw materials in a reducing atmosphere, and a method of mixing the raw materials with a reducing substance and then calcining the mixture in an inert atmosphere.

It is desired for the decrease in the particles in diameter that the pre-calcining temperature is equal to or higher than the crystallization temperature, and is not an excessively high temperature, in particular, a temperature not higher than the temperature of the crystallization temperature plus 50°C. If the pre-calcining temperature largely exceeds the crystallization temperature, crystal grows unfavorably so that the particle diameter increases. If the pre-calcining temperature is lower than the crystallization temperature, no crystal phase is produced by the calcination. When the pre-calcinated material is subsequently subjected to calcining at high temperature, it is feared that grain growth is caused. When the raw materials are pre-calcinated at a temperature just above the crystallization temperature, microcrystals are produced. This microcrystals function as nuclei when the calcining is performed. Thus, coarse particles are not generated. When the raw materials are pre-calcinated in an oxidizing atmosphere such as air in order to remove a carbon impurity, it is desired the temperature therefor is 400°C or higher. If the pre-calcining temperature is lower than this temperature, the impurity may unfavorably remain even when the pre-calcining temperature is the crystallization temperature or higher.

In the synthesis method of the present invention, a heating device such as an electric furnace is used to perform the two-stage firing, which is composed of the pre-calcining step and the calcining step. In the pre-calcining step at the first stage, the pre-calcination is performed in an oxidizing atmosphere, and further the pre-calcining temperature is desirably the crystallization temperature or higher, and does not exceed the crystallization temperature largely. The calcining step at the second stage is performed at a temperature higher than that in the pre-calcining step in an inert atmosphere or reducing atmosphere. By the calcining at the temperature higher than that in the pre-calcining step, the crystallinity of the active material can be heightened.

When carbon is mixed with the target material, carbon or an organic substance is mixed therewith between the pre-calcining step and the calcining step.

The present synthesis method is applicable not only to olivine but also to any positive electrode active material AₓMD_{y}O_{z} having a polyanion other than that of olivine, such as a silicate or borate. A is an alkali metal or an alkaline earth metal. M is one or more metal elements comprising at least one transition metal element. D is a typical element being covalently bondable to oxygen. O is oxygen, and x, y and z, respectively, satisfy the relationships 0 ≤ x ≤ 2, 1 ≤ y ≤ 2 and 3 ≤ z ≤ 7. D is bonded to O to form an anion. This positive electrode active material having such a polyanion is characterized by being low in electron conductivity, as well as olivine. Thus, it is essential for the active material that particles thereof are decreased in diameter and the particles are coated with carbon. As described above, the decrease in the particle diameter and the carbon coating may unfavorably cause the active material to be lowered in crystallinity. However, the use of the present synthesis method makes it possible to decrease particles of a polyanionic active material in diameter and coat the particles with carbon without lowering the active material in crystallinity.

The present invention makes it possible to make particles of a polyanionic active material, such as olivine, small in diameter, high in electroconductivity, and high in crystallinity, and provide a positive electrode for nonaqueous secondary batteries and a nonaqueous secondary battery that are each high in capacity and rate characteristic.

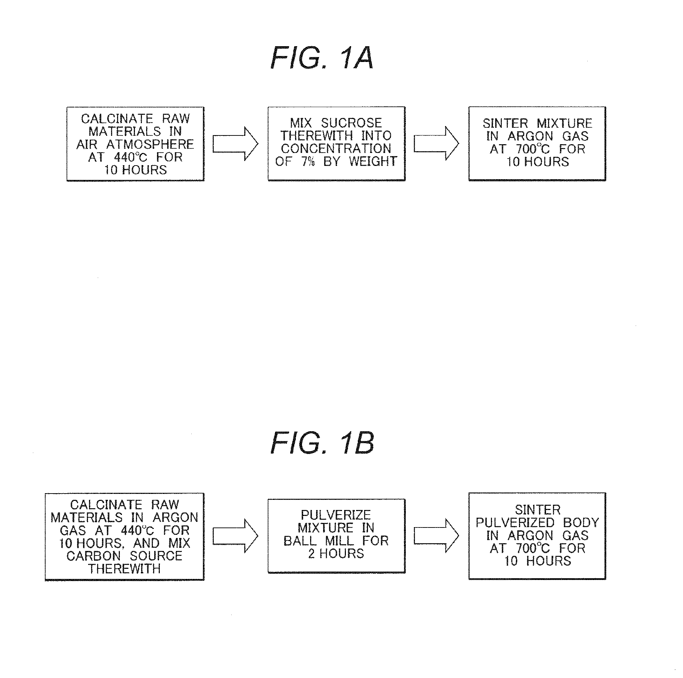

With reference to Figs. 1A and 1B, the method of the present invention for synthesizing a powder of a positive electrode active material will be described while compared with a conventional method.

The synthesis method of the present invention has two or more calcining steps to synthesize the positive electrode active material such as olivine, and is a method of performing the last of the calcining steps in an inert atmosphere or a reducing atmosphere, and performing at least one of the pre-calcining steps before the last calcining step in an oxidizing atmosphere. As illustrated in Fig. 1A, raw materials of a positive electrode active material (provided that the raw materials do not include carbon or any organic substance) are mixed with each other, and this mixture is pre-calcinated at 440°C in an oxidizing atmosphere for 10 hours. Next, sucrose as a carbon source is added to the pre-calcinated material to set the mass thereof to 7% by mass of the active material. The resultant is kneaded, and pulverized in a ball mill. The pulverized body is subjected to calcining at 700°C in an argon atmosphere for 10 hours. The resultant fired body particles have been coated with a carbon coat.

As illustrated in Fig. 1B, in a method performed conventionally in the prior art, a positive electrode active material, sucrose as a carbon source, and others are mixed with each other, and the mixture is pre-calcinated at 440°C in an atmosphere of an inert gas such as argon gas for 10 hours. The resultant is pulverized in a ball mill, and then subjected to calcining at 700°C in argon gas for 10 hours.

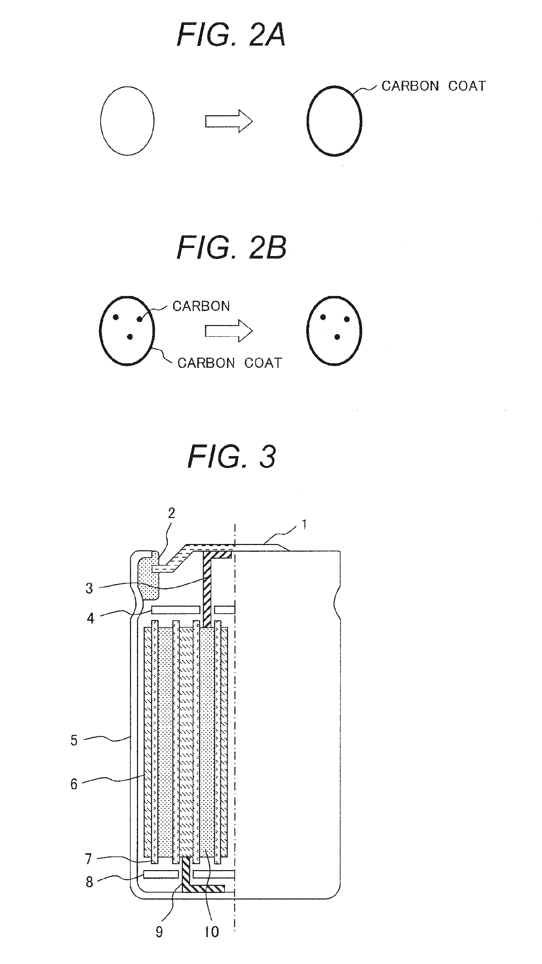

In the case of the method of the present invention, the calcination is performed in the oxidizing atmosphere such as air. Thus, as illustrated in Fig. 2A, particles obtained by this method, out of the respective positive electrode active material particles obtained by the above-mentioned two methods, hardly have therein carbon. Furthermore, the crystallinity of the particles advances.
By mixing sucrose with the pre-calcinated body, and then subjecting the mixture to the calcining, a positive electrode active material as illustrated in Fig. 2A is obtained.

By contrast, as illustrated in Fig. 2B, according to the conventional method, the raw materials are mixed with carbon before calcining, and then the mixture is pre-calcinated in the non-oxidizing atmosphere. Thus, in the resultant positive electrode active material particles, carbon remains. This remaining impurity hinders the crystallization of the positive electrode active material. A structure thereof is illustrated in Fig. 2B.

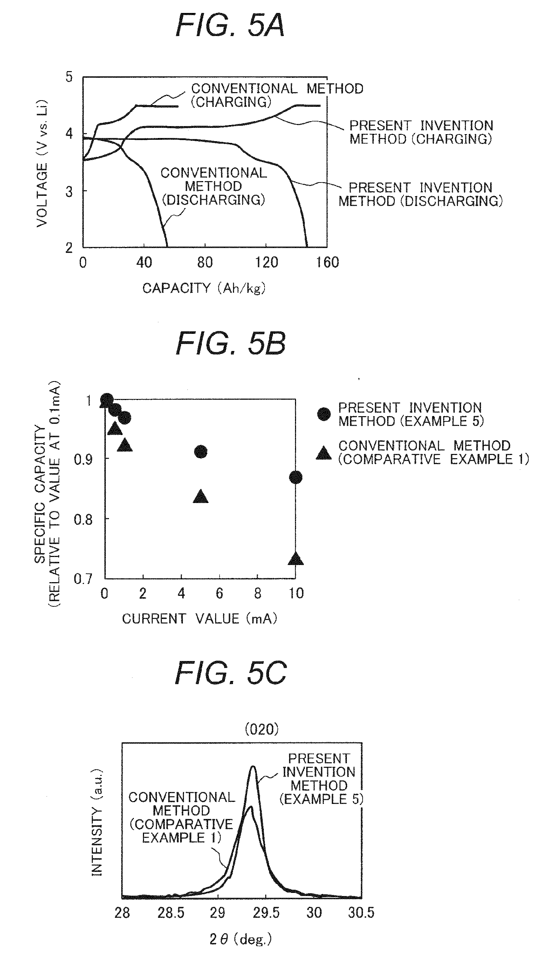

A positive electrode active material was synthesized by the method of the present invention, and a positive electrode active material was synthesized by a conventional method. These materials were used to form nonaqueous secondary batteries, respectively, and a comparison was made in properties between the two batteries. Figure 5A shows a comparison in voltage-to-capacity property between the two batteries, which were a lithium secondary battery according to the present invention method (Example 5, which will be described later) and a lithium secondary battery using the positive electrode active material according to the conventional method (Comparative Example 3, which will be described later). According to Fig. 5A, it is understood that the lithium secondary battery according to the present invention is higher in voltage and capacity than the lithium secondary battery according to the conventional method.

Figure 5B shows a comparison in specific-capacity-to-current-value between the lithium secondary battery using the positive electrode active material according to the present invention method (Example 5, which will be described later) and the lithium secondary battery using the positive electrode active material according to the conventional method (Comparative Example 3, which will be described later). It is understood that the lithium secondary battery according to the present invention method shows a higher specific capacity than the lithium secondary battery according to the conventional method. The specific capacity is the ratio to the discharge capacity at 0.1 mA.

Furthermore, as shown in Fig. 5C, the crystallinity degree of the positive electrode active material according to the present invention method and that of the positive electrode active material according to the conventional method are each shown in an XRD pattern thereof. Figure 5C shows that the positive electrode active material according to the present invention method has a higher crystallinity degree (smaller integral width) than the positive electrode active material according to the conventional method. In Fig. 5C, (020) represents Miller indices of each XRD peak therein.

The particle diameter of the positive electrode active material according to the conventional method is about 50 nm in the same manner as that of the positive electrode active material according to the present invention method. However, while the integral width in the case of the conventional method is 0.42, the width is 0.31 in the case of the present invention method. The difference between the integral widths would be based on a matter that according to the conventional method, the crystallinity does not become high because of carbon inside the crystal grains.

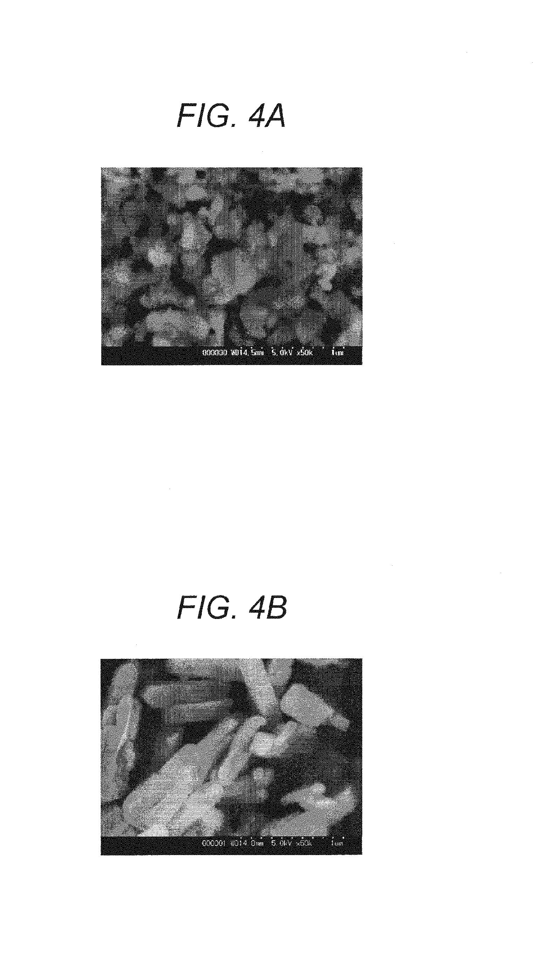

A known hydrothermal synthesis method also makes it possible to produce an active material made of crystal from which carbon is removed. A photograph of the external appearance of a positive electrode active material synthesized in Example 1, which will be described later, is shown in Fig. 4A; and one of the external appearance of a positive electrode active material synthesized by the hydrothermal synthesis method is shown in Fig. 4B. However, the positive electrode active material according to Example 1 has, in the particle surface thereof, irregularities as illustrated in Fig. 4A while the particle surface of the positive electrode active material in Fig. 4B is smooth. Accordingly, it is inferred that Example 1 is larger in specific surface area than the conventional example when the particles in the two examples have the same particle diameter. Thus, it can be favorably expected that in Example 1, the reaction area is increased.

Hereinafter, a preferred method for producing a positive electrode active material according to the present invention will be described in detail.

### <Mixing of Raw Materials>

Raw materials are pre-calcinated at a temperature which is equal to or higher than the crystallization temperature and does not exceed the crystallization temperature largely, whereby microcrystals can be precipitated. At this time, the size of the microcrystals depends on the particle diameter of the raw materials. Thus, in order to make the microcrystals small, it is more desired that the particle diameter of the raw materials of the positive electrode active material is smaller. In a case where the raw materials are not homogeneously mixed with each other, crystal precipitated when the materials are pre-calcinated coarsens or a different phase is generated. Thus, it is more desired that the raw materials are more homogeneously mixed with each other.

Specific examples of the mixing method include a method of using, for example, a bead mill to pulverize the raw materials mechanically to be mixed with each other, and a method of using, for example, an acid, alkali or chelating agent to make the raw materials into a solution state, and then drying the solution to mix the raw materials. In particular, the mixture that has undergone the solution state is favorable for the precipitation of the microcrystals since the raw materials are mixed with each other at a molecular level.

It is desired to use, as the raw materials of the positive electrode active material, a salt which does not remain after sintered. A metal source out of the raw materials may be at least one of acetic salts, oxalic salts, citric salts, carbonates, tartaric salts, and other salts. The metal corresponds to M (transition metal) in AₓMD_{y}O_{z} in the present specification. M includes at least one transition element, such as Fe, Mn, Co and Ni. One or more typical elements may be further incorporated into M as far as the proportion of the element or each of the elements does not exceed 10%, examples of the elements including Mg, Al, Zn, Sn, and Ca. If the proportion exceeds 10%, the proportion of the elements contributing to charge and discharge based on redox reaction is decreased so that the resultant battery is undesirably lowered in capacity. A lithium source to be used is, for example, lithium acetate, lithium carbonate or lithium hydroxide. A phosphoric ion source to be used is, for example, lithium dihydrogenphosphate, ammonium dihydrogenphosphate, or diammonium hydrogenphosphate.

### <Calcining>

In order to precipitate crystal, the pre-calcining temperature is desirably the crystallization temperature or higher. If the pre-calcining temperature is lower than the crystallization temperature, crystal growth is not caused so that the resultant pre-calcinated material becomes amorphous. Even when the pre-calcinated material is pulverized and subjected to calcining, seed crystals are not present, so that coarse particles are unfavorably generated. By raising the pre-calcining temperature, the diameter of the synthesized particles is controllable. However, if the pre-calcining temperature is too high, the particles are made coarse. About olivine, the crystallization temperature is at highest about 450°C. The pre-calcining temperature is desirably not higher than the crystallization temperature plus 50°C.

In accordance with the species of the active material, the crystallization temperature and the growth rate thereof are varied. Accordingly, the range of the pre-calcining temperature is varied in accordance with the species of the active material. About olivine, the crystallization temperature is about 420°C (source: Robert Dominko, Marjan Bele, Jean-Michel Goupil, Miran Gaberscek, Darko Hanzel, Iztok Arcon, and Janez Jamnik `Wired Porous Cathode Materials: A Novel Concept for Synthesis of LiFePo4', Chemistry of Materials 19 (2007), pp. 2960-2969). Thus, it is necessary to calcinate olivine at 420°C or higher. When the pre-calcining temperature is 600°C or lower, grain growth can be restrained. At a temperature higher than 600°C, crystal growth is largely promoted. Thus, such temperatures are improper. About olivine, the pre-calcining temperature range is desirably from 440 to 500°C both inclusive. When the temperature is 440°C or higher, the whole of the sample becomes the crystallization temperature or higher even when the inside of the sample is somewhat uneven in temperature. When the pre-calcining temperature is 500°C or lower, the resultant pre-calcinated material turns into 100 nm or less in particle diameter. By pulverizing this pre-calcinated material and then subjecting the pulverized body to calcining, fine particles of several tens of micrometers can be synthesized.

About the atmosphere for the calcination, it is easy to use an oxygen-containing as an oxidizing atmosphere. Considering costs, it is desired to use air. In olivine (LiMPO₄), the metal M is in a bivalent state. In the case of using, for example, Fe as M, it is conceivable that the firing of M in an oxidizing atmosphere is improper. Thus, M is generally sintered in a reducing atmosphere. The inventors have found out that it is permissible to calcinate raw materials in an oxidizing atmosphere and then reduce the pre-calcinated material when the material is subjected to calcining, and further that an advantageous effect of improving the resultant in crystallinity can be obtained.

When the calcination has been performed in an oxidizing atmosphere, any organic substance or carbon added thereto disappear, as described above. When the pre-calcining temperature is proper, the growth of microcrystals is restrained by spaces generated after the disappearance. Furthermore, by the disappearance of carbon, incorporation of carbon into the crystal can be prevented. Accordingly, in the oxidizing atmosphere, the pre-calcinated material can be made higher in crystallinity than in an inert atmosphere or reducing atmosphere. In particular, when the raw materials undergoe a solution state and then mixed with each other in a homogeneous form, the carbon source and the raw materials are mixed with each other in a homogeneous form. Thus, carbon is easily taken into the pre-calcinated material in an inert atmosphere or reducing atmosphere. For this reason, the calcination in the oxidizing atmosphere is effective for heightening the crystallinity. In order to remove carbon sufficiently, the pre-calcining temperature is desirably 400°C or higher regardless of the above-mentioned crystallization temperature.

The microcrystals produced by performing the pre-calcining in this way are coated with carbon, and subjected to calcining through steps described below. In this way, the microcrystals coated with carbon can be improved in crystallinity.

### <Mixing with Carbon Source, and Coating>

Since the microcrystals (pre-calcinated material) generated by the calcination is low in crystallinity, it is necessary to sinter the microcrystals at a higher temperature to improve the crystallinity. However, merely when the pre-calcinated material is subjected to calcining at a high temperature, the microcrystals are bonded to each other to grow unfavorably. By mixing the microcrystals generated by the calcination with an organic substance, or acetylene black or any other fine carbon, the organic substance or carbon is caused to adhere closely to the circumference of the microcrystals to coat the microcrystals with the organic substance or carbon. In this way, the growth of the crystal can be restrained.

In a case where the microcrystals are partially bonded to each other to form a mesh structure, the mesh structure is easily broken by applying a mechanical pressure thereto when the mesh structure has narrow microstructures having a mesh of 500 nm or less. Thus, the microcrystals can be made finer. The manner for attaining the coating and making the microcrystals finer effectively is desirably a manner of using a ball mill or bead mill to apply the mechanical pressure.

### <Calcining>

In the calcining, the pre-calcinated material is heated at a temperature higher than that in the pre-calcining step to carbonize the organic substance to improve the resultant sintered material in electroconductivity, and additionally the active material particles are improved in crystallinity or are crystallized. In order to prevent the metal elements from being oxidized, and further coat the particles with carbon, the calcining is performed in an inert atmosphere or reducing atmosphere. In order to carbonize the organic substance to improve the electroconductivity, the calcining temperature is desirably 600°C or higher. The calcining is desirably performed at a temperature equal to or lower than the temperature at which the active material is thermally decomposed. About olivine, the range of the calcining temperature is desirably from 600 to 850°C both inclusive. When the calcining temperature is 600°C or higher, the carbon source can be carbonized to give electroconductivity to the resultant. When the temperature is 850°C or lower, the active material is not decomposed. The range is more desirably from 700 to 750°C both inclusive. This temperature range makes it possible to improve the carbon electroconductivity sufficiently and further restrain the generation of impurities which is caused by reaction between carbon and olivine.

As described above, by the use of the method according to the present invention for producing a positive electrode active material, the small-diameter particles coated with carbon can be further improved in crystallinity.

Hereinafter, a description will be made about a positive electrode for lithium secondary batteries, and a lithium secondary battery as an example of the nonaqueous secondary battery according to the present invention.
Figure 3 illustrates an example of a lithium secondary battery to which the lithium secondary battery according to the invention is applied. The lithium secondary battery illustrated in Fig. 3 is in a cylindrical form. The present lithium secondary battery has a positive electrode (positive electrode according to the invention for lithium secondary batteries) 10, a negative electrode 6, a separator 7, a positive electrode lead 3, a negative electrode lead 9, a battery lid 1, a gasket 2, insulator plates 4 and 8, and a battery can 5. The positive electrode 10 and the negative electrode 6 are wound to interpose the separator 7 therebetween. The separator 7 is impregnated with an electrolytic solution in which an electrolyte is dissolved in a solvent.

Hereinafter, detailed descriptions will be made about the positive electrode 10, the negative electrode 6, the separator 7, and the electrolyte, respectively.

### (1) Positive electrode

The positive electrode according to the present invention for lithium secondary batteries is composed of a positive electrode active material, a binder, and a collector. A positive electrode mixture containing the positive electrode active material and the binder is formed on the collector. In order to supplement the electron conductivity, a conducting agent may be added to the positive electrode mixture as required.

Hereinafter, a description will be made about details of the positive electrode active material, the binder, the conducting agent, and the collector, which constitute the positive electrode according to the present invention.

### A) Positive electrode active material

The positive electrode active material according to the present invention is an active material produced by use of the above-mentioned production method (synthesis method).

### B) Binder

The binder is preferably PVDF (polyvinylidene fluoride), polyacrylonitrile, or any other ordinary binder. The kind of the binder is not limited as far as the binder has a sufficient binding performance.

### C) Conducting agent

By the incorporation of the conducting agent as a constituent of the positive electrode to give electroconductivity simultaneously with the use of the binder, which is excellent in adhesiveness, as described above, a strong electroconductive network is formed. Desirably, therefore, the positive electrode is improved in electroconductivity, and further improved in capacity and rate characteristic. Hereinafter, a description will be made about the conducting agent used in the positive electrode according to the present invention, and the addition amount thereof.

The conducting agent may be a carbon-based conducting agent, such as acetylene black or graphite powder. An olivine Mn-based positive electrode active material is high in specific surface area; thus, in order to form the electroconductive network, it is desired that the conducting agent is large in specific surface area. Specifically, the conducting agent is desirably acetylene black or the like. The positive electrode active material may be coated with carbon; however, in this case, the coating carbon may be used as the conducting agent.

### D) Collector

The collector may be a support having electroconductivity, such as an aluminum foil piece.

As described above, in order to gain a positive electrode having properties high in capacity and rate characteristic, it is desired to use an olivine Mn-based positive electrode active material as the positive electrode active material, use an acrylonitrile copolymer as the binder, and use any conducting agent, which may be coating carbon on the active material when the positive electrode active material is coated with carbon.

### (2) Negative electrode

The negative electrode of the lithium secondary battery according to the present invention is composed of a negative electrode active material, a conducting agent, a binder, and a collector.

The negative electrode active material may be any material as far as Li can be reversibly inserted into and eliminated from the material by charging or discharging. The active material may be, for example, a carbon material, a metal oxide, a metal sulfide, metallic lithium, or any alloy composed of metallic lithium and any other metal. The carbon material may be, for example, graphite, amorphous carbon, cokes, or pyrolytic carbon.

The conducting agent may be any conducting graphite known in the prior art, and is, for example, a carbon-based conducting graphite such as acetylene black or graphite powder. In the same way, the binder may be any binder known in the prior art. Examples thereof include PVDF (polyvinylidene fluoride), SBR (styrene butadiene rubber), and NBR (nitrile rubber). In the same way, the collector may be any collector known in the prior art, and is, for example, a support having electroconductivity, such as a copper foil piece.

### (3) Separator

The separator is not particularly limited, and may be a separator made of a material known in the prior art. The separator is, for example, a polyolefin-based porous membrane made of, for example, polypropylene or polyethylene, or a glass fiber sheet.

### (4) Electrolyte

The electrolyte may be a lithium salt, examples thereof including LiPF₆, LiBF₄, LiCF₃SO₃, LiN(SO₂CF₃)₂, and LiN(SO₂F)₂. These salts may be used alone or in a mixture form. Examples of the solvent in which the lithium salt is dissolved include linear carbonates, cyclic carbonates, cyclic esters, and nitrile compounds. Specific examples thereof include ethylene carbonate, propylene carbonate, diethyl carbonate, dimethoxyethane, γ-butyrolactone, n-methylpyrrolidine, and acetonitrile. Other examples of the electrolyte may be polymer gel electrolytes, and solid electrolytes.

Using the above-mentioned positive electrode, negative electrode, separator and electrolyte, a nonaqueous secondary battery can be produced which may be of various forms, such as cylindrical, rectangular, and laminated forms.

Hereinafter, a description will be made about examples in which an olivine type positive electrode active material was synthesized as working examples. After the description, a description will be made about measurement results of properties (the capacity and rate characteristic) of electrodes produced by use of the synthesized positive electrode active materials.

### [Example 1]

### <Synthesis of Positive Electrode Active Material>

In Example 1, a positive electrode active material in which entire metal ions were made of Mn (LiMnPO₄) was produced. A used metal source was manganese oxalate dihydrate (MnC₂O₄·2H₂O). Thereto was added lithium dihydrogenphosphate (LiH₂PO₄) in an amount equal to the total mole number of the metal ions. In other words, the charged composition was adjusted to have a ratio (by mole) of Li:M (metal ion species):PO₄ = 1:1:1. The raw materials were weighed and mixed with each other by a wet ball mill. After the mixing, the mixture was dried to yield a raw material mixed powder. A box-shaped electric furnace was used to calcinate the raw material mixed powder. The pre-calcining atmosphere was rendered air. The pre-calcining temperature and the pre-calcining period were set to 440°C and 10 hours, respectively.

To this pre-calcinated material was added sucrose, as a carbon source and particle-diameter controller, in a proportion of 7% by mass of the pre-calcinated material. A wet ball mill was used to pulverize this mixture and mix the pulverized particles with each other for 2 hours. Next, a ring furnace capable of controlling an atmosphere therein was used to sinter the pulverized mixture. The calcining atmosphere was rendered an Ar atmosphere. The calcining temperature and the calcining time were set to 700°C and 10 hours, respectively.

Through the above-mentioned steps, LiMnPO₄ was yielded. The synthesized active material was used to produce an electrode (positive electrode). Measurements were then made about properties of the electrode, that is, the capacity and the rate characteristic thereof. A description will be made about the method for producing the electrode hereinafter.

The positive electrode active material, a conducting agent, a binder, and a solvent were mixed with each other on a mortar to prepare slurry. The used conducting agent was an acetylene black (DENKA BLACK (registered trademark), manufactured by Denki Kagaku Kogyou Kabushiki Kaisha), the used binder was a modified polyacrylonitrile, and the used solvent was N-methyl-2-pyrrolidone (NMP). The binder was used in the form of a solution in which the binder was dissolved in NMP. The composition of the electrode was adjusted in such a manner that the ratio by weight of the positive electrode active material:the conducting agent:the binder would be 82.5:10:7.5.

A blade having a gap set to 250 µm was used to paint the prepared slurry onto an aluminum foil piece having a thickness of 20 µm to give a coating amount of 5 to 6 mg/cm². This workpiece was dried at 80°C for 1 hour, and then a punching tool was used to punch out the workpiece into the form of a disc having a diameter of 15 mm. About the punched-out electrode, a handy press was used to compress the mixture therein. The thickness of the mixture was adjusted into the range of 38 to 42 µm. All the electrodes were each produced in such a manner that the coating amount and the thickness were put into the above-mentioned ranges, respectively. In this way, the respective structures of the electrodes were kept into a constant form. Before a model cell was fabricated, the electrodes were dried at 120°C. In order to remove the effect of water, all operations would be made in a dry room.

The capacity and the rate characteristic were evaluated, using a three-electrode type model cell which was a simple reproduction of a battery. The three-electrode type model cell was produced as follows: Any one of the test electrodes punched into the diameter of 15 mm, an aluminum collector, metallic lithium for a counter electrode, and metallic lithium for a reference electrode were stacked onto each other to interpose a separator impregnated with an electrolytic solution between any two of these members. The used electrolytic solution was a solution obtained by mixing ethylene carbonate (EC) and ethylmethyl carbonate (EMC) at a ratio (by volume) of 1:2, dissolving LiPF₆ into this mixed solvent to set the concentration of the salt to 1 M, and then adding VC (vinylene carbonate) to the solution to give a concentration of 0.8% by mass. Two end plates made of SUS were used to sandwich this stacked body, and then the plates were fastened to each other with bolts. This workpiece was put into a glass cell to produce the three-electrode type model cell.

A test for measuring the capacity and the rate characteristic of the cell was made in a glove box in an Ar atmosphere. In the capacity measurement, the model cell was charged up to a voltage of 4.5 V at a constant current value of 0.1 mA. After the voltage reached to 4.5 V, the cell was discharged at the constant voltage until the current value reached to 0.03 mA. Thereafter, the cell was discharged down to 2 V at a constant current of 0.1 mA. The discharge capacity at this time was used as the capacity.

This charge-discharge cycle was repeated 3 times, and then the rate characteristic of the cell was evaluated under the following conditions: The model cell subjected to the same constant current charging and constant voltage discharging as in the capacity measurement was discharged at a constant current value of 5 mA. The capacity at this time was used as the rate characteristic. All the tests were made at room temperature (25°C).

### [Example 2]

The same synthesis was performed in the same way as in Example 1 except that the pre-calcining temperature was changed to 600°C, so as to yield LiMnPO₄. The capacity and the rate characteristic were measured in the same way.

### [Example 3]

The same synthesis was performed in the same way as in Example 1 except that the used metal source was changed to iron oxalate dihydrate (FeC₂O₄·2H₂O) and the metal ions were wholly changed to Fe, so as to yield LiFePO₄. The capacity and the rate characteristic were measured in the same way as in Example 1.

### [Example 4]

The same synthesis was performed in the same way as in Example 3 except that the pre-calcining temperature was changed to 600°C, so as to yield LiFePO₄. The capacity and the rate characteristic were measured in the same way.

Reference Examples described below are not known examples since the reference examples satisfied the requirement of the present invention that calcination was performed in an oxidizing atmosphere. However, these examples are each described as Reference Example since the pre-calcining temperature was somewhat lower than the crystallization temperature of a target positive electrode active material.

### [Reference Example 1]

The same synthesis was performed in the same way as in Example 1 except that the pre-calcining temperature was changed to 380°C, so as to yield LiMnPO₄. The capacity and the rate characteristic were measured in the same way.

### [Reference Example 2]

The same synthesis was performed in the same way as in Example 3 except that the pre-calcining temperature was changed to 380°C, so as to yield LiFePO₄. The capacity and the rate characteristic were measured in the same way.

### [Example 5]

### <Synthesis of Positive Electrode Active Material>

As metal sources, iron oxalate dihydrate (FeC₂O_{4·}2H₂O) and manganese oxalate dihydrate (MnC₂O₄·2H₂O) were used. These compounds were weighed to set the ratio (by atom number) of Mn:Fe to 8:2. Next, thereto was added lithium dihydrogenphosphate (LiH₂PO₄) in an amount equal to the total mole number of the metal ions. In other words, the charged composition was adjusted to have a ratio (by mole) of Li:M (metal ion species):PO₄ = 1:1:1. The raw materials were weighed and mixed with each other by a wet ball mill. After the mixing, the mixture was dried to yield a raw material mixed powder.

A box-shaped electric furnace was used to pre-calcining of the raw material mixed powder. The pre-calcining atmosphere was rendered air. The pre-calcining temperature and the pre-calcining period were set to 440°C and 10 hours, respectively. To this pre-calcinated material was added sucrose, as a carbon source and particle-diameter controller, in a proportion of 7% by mass of the pre-calcinated material. A wet ball mill was used to pulverize this mixture and mix the pulverized particles with each other for 2 hours. Next, a ring furnace capable of controlling an atmosphere therein was used to calcining the pulverized mixture. The calcining atmosphere was rendered an Ar atmosphere. The calcining temperature and the calcining time were set to 700°C and 10 hours, respectively.

Through the above-mentioned steps, LiFe_{0.2}Mn_{0.8}PO₄ was yielded. The synthesized active material was used to produce an electrode (positive electrode). Measurements were then made about properties of the electrodes, that is, the capacity and the rate characteristic. The respective measurements of the capacity and the rate characteristic were made in the same way as in Example 1.

### [Example 6]

The same synthesis was performed in the same way as in Example 5 except that the pre-calcining temperature was changed to 600°C, so as to yield LiFe_{0.2}Mn_{0.8}PO₄. The capacity and the rate characteristic were measured in the same way as in Example 1.

### [Reference Example 3]

The same synthesis was performed in the same way as in Example 5 except that the pre-calcining temperature was changed to 380°C, so as to yield LiFe_{0.2}Mn_{0.8}PO₄. The capacity and the rate characteristic were measured in the same way.

### [Example 7]

The same synthesis was performed in the same way as in Example 1 except that the used metal sources were changed to iron oxalate dihydrate (FeC₂O₄·2H₂O), manganese oxalate dihydrate (MnC₂O_{4·}2H₂O) and magnesium hydroxide (Mg(OH)₂), and the ratio of Fe:Mg:Mg was set to a ratio of 2:7.7:0.3, so as to yield LiFe_{0.2}Mn_{0.77}Mg_{0.03}PO₄. The capacity and the rate characteristic were measured in the same way in Example 1.

### [Comparative Example 1]

The same synthesis was performed in the same way as in Example 1 except that the pre-calcining atmosphere was changed to Ar, so as to yield LiMnPO₄. The capacity and the rate characteristic were measured in the same way.

### [Comparative Example 2]

The same synthesis was performed in the same way as in Example 3 except that the pre-calcining atmosphere was changed to Ar, so as to yield LiFePO₄. The capacity and the rate characteristic were measured in the same way.

### [Comparative Example 3]

The same synthesis was performed in the same way as in Example 5 except that the pre-calcining atmosphere was changed to Ar, so as to yield LiFe_{0.2}Mn_{0.8}PO₄. The capacity and the rate characteristic were measured in the same way.

### [Comparative Example 4]

The same synthesis was performed in the same way as in Example 7 except that the pre-calcining atmosphere was changed to Ar, so as to yield LiFe_{0.2}Mn_{0.77}Mg_{0.03}PO₄. The capacity and the rate characteristic were measured in the same way.

Figure 4A shows a scanning electron microscopic image of the sample synthesized in Example 5. For the observation, a scanning electron microscope S-4300 (manufactured by Hitachi High-Technologies Corp.) was used.

About each of Examples 1 to 7, Reference Examples 1 to 3, and Comparative Examples 1 to 4, in Table 1 are together shown the composition of the active material, the synthesizing conditions, and the capacity and the rate characteristic of the synthesized active material.

**[Table 1]**

| | Positive electrode active material composition | Pre-calcining atmosphere | Pre-calcining temperature (°C) | Capacity (Ah/kg) | Energy density (Wh/kg) | Rate characteristic (Ah/kg) |
|---|---|---|---|---|---|---|
| Example 1 | LiMnPO₄ | Air | 440 | 130 | 480 | 100 |
| Example 2 | LiMnPO₄ | Air | 600 | 110 | 412 | 60 |
| Comparative example 1 | LiMnPO₄ | Argon | 440 | 100 | 369 | 30 |
| Reference example 1 | LiMnPO₄ | Air | 380 | 100 | 402 | 50 |
| Example 3 | LiFePO₄ | Air | 440 | 165 | 546 | 145 |
| Example 4 | LiFePO₄ | Air | 600 | 160 | 525 | 130 |
| Comparative example 2 | LiFePO₄ | Argon | 440 | 160 | 513 | 125 |
| Reference example 2 | LiFePO₄ | Air | 380 | 150 | 505 | 120 |
| Example 5 | LiFe_{0.2}Mn_{0.8}PO₄ | Air | 440 | 155 | 596 | 137 |
| Example 6 | LiFe_{0.2}Mn_{0.8}PO₄ | Air | 600 | 156 | 600 | 115 |
| Reference example 3 | LiFe_{0.2}Mn_{0.8}PO₄ | Air | 380 | 135 | 530 | 85 |
| Comparative example 3 | LiFe_{0.2}Mn_{0.8}PO₄ | Argon | 440 | 135 | 476 | 100 |
| Example 7 | LiFe_{0.2}Mn_{0.77}Mg_{0.03}PO₄ | Air | 440 | 158 | 602 | 140 |
| Comparative example 4 | LiFe_{0.2}Mn_{0.77}Mg_{0.03}PO₄ | Argon | 440 | 125 | 428 | 90 |

In Table 1, the positive electrode active materials are arranged into groups in each of which some of these materials had the same composition. The reason therefor is that it is necessary for understanding the effect and the advantages of the present invention that properties of materials having the same composition, out of the positive electrode active materials, are compared therebetween. The pre-calcining atmosphere of Examples 1 to 7 and Reference Examples 1 to 3 was air while that of the Comparative Examples 1, 2, 3 and 4 was argon gas.

In each of Reference Examples 1, 2, and 3, in which the pre-calcining atmosphere is air and the pre-calcining temperature is 380°C, the rate characteristic is slightly lower than in the working example of the invention. In Examples 2, 4 and 6, the pre-calcining temperature is 600°C, so that the rate characteristic may be slightly low. However, the capacity and the energy density at low discharge rates have no practical problem. According to the calcination at 600°C, the growth of crystal grains is recognized so that the capacity at high discharge rates is slightly lowered. However, the grown particles can also be used. Accordingly, the pre-calcining temperature is preferably 400°C or higher, and lower than 600°C, and is in particular preferably in a range from 400 to 550°C.

Table 2 shows the capacity, the energy density and the rate characteristic of each of lithium secondary batteries produced using positive electrode active materials produced by pre-calcining LiFe_{0.2}Mn_{0.8}PO₄ at 400°C, 500°C, and 550°C, respectively. The energy density and the capacity are values when the battery is discharged at 0.1 C. As is evident from Table 2 and the following description, when the pre-calcining temperature is in particular from 400 to 550°C, the capacity, the energy density and the rate characteristic are high values with a good balance.

**[Table 2]**

| | Composition | Pre-calcining atmosphere | Pre-calcining temperature (°C) | Capacity (Ah/kg) | Energy density (Wh/kg) | Rate characteristic (Ah/kg) |
|---|---|---|---|---|---|---|
| Example 8 | LiFe_{0.2}Mn_{0.8}PO₄ | Air | 400 | 142 | 558 | 128 |
| Example 9 | LiFe_{0.2}Mn_{0.8}PO₄ | Air | 500 | 156 | 599 | 125 |
| Example 10 | LiFe_{0.2}Mn_{0.8}PO₄ | Air | 550 | 153 | 588 | 121 |

When a comparison is made between Examples 1 and 2, and Comparative Example 1, in each of which the positive electrode active material is LiMnPO₄, the working examples of the invention are better in capacity, energy density and rate characteristic than the comparative example. When the pre-calcining atmosphere is argon gas, the resultant is in particular poor in rate characteristic.

When a comparison is made between Examples 3 and 4, and Comparative Example 2, in each of which the positive electrode active material is LiFePO₄, these examples are wholly higher in rate characteristic than the cases in which the positive electrode active material is LiMnPO₄. Comparative Example 2, in which the pre-calcining atmosphere is argon gas, is lower in rate characteristic than Examples 3 and 4.

When a comparison is made between Examples 5 and 6, and Comparative Example 3, in each of which the positive electrode active material is LiFe_{0.2}Mn_{0.8}PO₄, the working examples of the invention are sufficiently higher in rate characteristic.

When a comparison is made between Example 7 and Comparative Example 4, in each of which the positive electrode active material was LiFe_{0.2}Mn_{0.77}Mg_{0.03}PO₄, the working example is sufficiently higher in rate characteristic.

Comparisons are made between Example 1 and Comparative Example 1, between Example 2 and Comparative Example 2, between Example 3 and Comparative Example 3, and between Example 4 and Comparative Example 4, respectively. As a result, the cases in which the pre-calcining atmosphere is air are better in capacity and rate characteristic than the cases in which the pre-calcining atmosphere is argon. From this matter, it is understood that calcination in an oxidizing atmosphere produces an advantageous effect of improving the resultant batteries in properties even when the respective compositions of the batteries are in a broad range.

The pre-calcining temperature of each of Examples 2, 4 and 6 is at least 100°C higher than the crystallization temperature of the target positive electrode active material. Thus, the working examples of the invention are not largely affected about capacity, as described above, but may be lowered in rate characteristic. This would be because the particle diameter increases.

By contrast, Reference Examples 1, 2 and 3 are poor in both of capacity and rate characteristic, in particular, at temperatures lower than 400°C since the pre-calcining temperature is set to the crystallization temperature or lower. Causes therefor are that no seed crystal is produced by the calcination so that a satisfactory crystal growth may not be attained in the calcining, and further that the organic components contained in the raw materials are taken into the crystal without disappearing, so that the crystallinity is declined.

The above-mentioned results demonstrate that the method of the present invention for producing a positive electrode active material for nonaqueous secondary batteries makes it possible to provide a nonaqueous secondary battery high in capacity, energy density and rate characteristic, using a polyanionic positive electrode active material. Reference Signs List

1: battery lid, 2: gasket, 3: positive electrode lead, 4 and 8: insulator plates, 5: battery can, 6: negative electrode, 7: separator, 9: negative electrode lead, and 10: positive electrode.

## Claims

1. A method for producing a positive electrode active material for nonaqueous secondary batteries, the positive electrode active material being represented by a chemical formula of AₓMD_{y}O_{z} wherein A is an alkali metal or an alkaline earth metal, M is one or more metal elements comprising at least one transition metal element,
, D is a typical element being covalently bondable to oxygen O to form an anion, and x, y and z, respectively, satisfy the relationships 0 ≤ x ≤ 2, 1 ≤ y ≤ 2 and 3 ≤ z ≤ 7,
the method comprising:
the step of mixing raw materials of the positive electrode active material with each other,
the step of pre-calcining the mixed raw materials in an oxidizing atmosphere at a temperature of 400°C or higher,
the step of mixing carbon or an organic substance with a pre-calcinated material yielded through the pre-calcining step, and
the step of calcining the pre-calcinated material, with which carbon or the organic substance is mixed, in a reducing atmosphere or an inert atmosphere.

2. The method for producing a positive electrode active material for nonaqueous secondary batteries according to claim 1, wherein the formula AₓMD_{y}O_{z} is LiMPO₄ wherein M is one or more metal elements comprising at least one metal element selected from Fe, Mn, Co and Ni.

3. The method for producing a positive electrode active material for nonaqueous secondary batteries according to claim 1, wherein the positive electrode active material contains bivalent Fe.

4. The method for producing a positive electrode active material for nonaqueous secondary batteries according to claim 1, wherein the temperature of the pre-calcining step is equal to or higher than the crystallization temperature of the target positive electrode active material, and is not higher than the temperature of the crystallization temperature plus 50°C.

5. The method for producing a positive electrode active material for nonaqueous secondary batteries according to claim 1, wherein the temperature of the pre-calcining step is from 400 to 600°C both inclusive.

6. The method for producing a positive electrode active material for nonaqueous secondary batteries according to claim 1, wherein the temperature of the pre-calcining step is from 400 to 550°C both inclusive.

7. The method for producing a positive electrode active material for nonaqueous secondary batteries according to claim 1, wherein the positive electrode active material is a material selected from the group consisting of LiMnPO₄, LiFePO₄, LiFe_{0.2}Mn_{0.8}PO₄, and LiFe_{0.2}Mn_{0.77}Mg_{0.03}PO₄.

8. A positive electrode active material for nonaqueous secondary batteries, the active material being produced by the method recited in claim 1, which is a method for producing a positive electrode active material for nonaqueous secondary batteries.

9. A positive electrode for nonaqueous secondary batteries, comprising a positive electrode mixture including a positive electrode active material, and a positive electrode collector, wherein the positive electrode active material is the nonaqueous-secondary-battery-usable positive electrode active material recited in claim 8.

10. A nonaqueous secondary battery, comprising a positive electrode, a negative electrode, a separator being arranged between the positive electrode and the negative electrode, and an electrolyte, wherein the positive electrode is the positive electrode recited in claim 8 for nonaqueous secondary batteries.
